# DEMANDE DE BREVET EUROPEEN

(11) **EP 4 579 572 A1**
(43) Date de publication de la demande: **02.07.2025**
(21) Numéro de dépôt: 24223546.3
(22) Date de dépôt: 27.12.2024
(51) Int. Cl.: G06Q 50/06, F28D 20/00, G06Q 50/163, H02J 3/14, H02J 3/28

(54) **PROCÉDÉ ET DISPOSITIF DE GESTION D'ÉNERGIE DANS UN ENVIRONNEMENT COMPLEXE D'UNE HABITATION**

(30) Priorité: 29.12.2023 FR 2315477
(71) Demandeur: FRANCE MEMBRANES TECHNOLOGIES - FMT, 34070 Montpellier (FR)
(72) Inventeur: MERICAN, Franck, 34070 MONTPELLIER (FR)
(74) Mandataire: Casalonga

(57) **Abrégé**

L'invention concerne un procédé de gestion d'énergie dans un système pour habitation comprenant des sources d'énergie électrique, un consommateur d'énergie électrique destiné à la production d'énergie thermique et un moyen de stockage d'énergie thermique. Après avoir obtenu (200) des caractéristiques du consommateur d'énergie électrique, comprenant un indice de besoins énergétiques dépendant de conditions météorologiques, avoir obtenu (205) des caractéristiques des sources d'énergie électrique comprenant un indice de performance environnementale et un indice de disponibilité, avoir obtenu (220) une indication de température actuelle et une température cible et avoir obtenu (225) des prévisions météorologiques, des besoins d'énergie thermique sont estimés (230) en fonction des indications de température et des prévisions météorologiques et une utilisation des sources d'énergie électrique et du moyen de stockage d'énergie thermique est estimée en fonction des caractéristiques des sources d'énergie électrique, des prévisions météorologiques et des besoins d'énergie thermique.

## Description

### DOMAINE TECHNIQUE DE L'INVENTION

Le domaine de l'invention concerne la gestion d'énergie dans un environnement complexe d'une habitation comprenant plusieurs sources d'énergie électrique.

### ÉTAT DE LA TECHNIQUE

Il est tout d'abord observé qu'en raison de l'augmentation du coût de l'énergie et d'un besoin d'optimisation de la consommation d'énergie nécessaire à la protection de la planète, la population est invitée à passer d'une énergie carbonée à une énergie décartonnée et à réduire sa consommation. Cela concerne autant le domaine de l'habitation que celui de la mobilité.

Bien que de nombreuses solutions visant à améliorer la consommation d'énergie aient été développées, aucune d'entre elles ne permet de maintenir un niveau de confort tel que celui offert par les énergies carbonées tout en s'adaptant aux contraintes de disponibilité et/ou de coûts des énergies renouvelables.

Les énergies renouvelables comprenant notamment l'énergie éolienne, l'énergie solaire, la biomasse, l'énergie hydraulique et la géothermie permettent une production de chaleur ou d'électricité. Ces énergies présentent de nombreux avantages, notamment en termes de ressources ou de disponibilité dans le temps, mais également des inconvénients en termes de coûts ou de disponibilité immédiate. Par exemple, l'énergie éolienne et l'énergie solaire ne sont disponibles qu'en fonction des conditions météorologiques tandis que d'autres énergies renouvelables ont un coût de production non négligeable pouvant influencer leur rendement et donc l'intérêt de leur utilisation.

Il existe donc un besoin pour améliorer la gestion d'énergie dans un environnement complexe d'une habitation afin de limiter la consommation d'énergie carbonée et réduire les coûts de dépenses énergétiques tout en offrant un niveau de confort souhaité.

### EXPOSÉ DE L'INVENTION

La présente invention vise à améliorer l'utilisation des sources d'énergie.

L'invention a pour objet un procédé de gestion d'énergie dans un système pour habitation comprenant une pluralité de sources d'énergie électrique, au moins un consommateur d'énergie électrique destiné à la production d'énergie thermique et au moins un moyen de stockage d'énergie thermique, le procédé comprenant les étapes suivantes ;
- obtention de caractéristiques dudit au moins un consommateur d'énergie électrique, lesdites caractéristiques obtenues dudit au moins un consommateur d'énergie électrique comprenant un indice de besoins énergétiques, l'indice de besoins énergétiques étant dépendant de conditions météorologiques ;
- obtention de caractéristiques de chaque source d'énergie électrique de ladite pluralité de sources, lesdites caractéristiques obtenues de chaque source d'énergie électrique comprenant un indice de performance environnementale et un indice de disponibilité, l'indice de disponibilité d'au moins une desdites sources d'énergie électrique étant dépendant de conditions météorologiques ;
- obtention d'au moins une indication de température actuelle et d'au moins une température cible ;
- obtention de prévisions météorologiques d'un lieu où se situe ledit système ;
- estimation de besoins d'énergie thermique en fonction desdites indications de température obtenues et desdites prévisions météorologiques obtenues et estimation d'une utilisation desdites sources d'énergie électrique et dudit au moins un moyen de stockage d'énergie thermique, ladite utilisation desdites sources d'énergie électrique et dudit au moins un moyen de stockage d'énergie thermique étant déterminée en fonction de chacune desdites caractéristiques de chaque source d'énergie électrique de ladite pluralité de sources, desdites prévisions météorologiques obtenues et des besoins d'énergie thermique estimés.

L'invention permet notamment d'optimiser la consommation d'énergie en fonction d'un ensemble de sources selon une estimation de consommation, de production par différentes sources et de performances environnementales.

Des caractéristiques préférées, simples, commodes et économiques du dispositif selon l'invention sont présentées ci-après.

Par exemple, selon des modes de réalisation particuliers, ledit système comprend en outre des moyens d'estimation de production énergétique d'au moins une desdites sources d'énergie électrique, des caractéristiques de ladite au moins une desdites sources d'énergie étant obtenues en fonction d'une estimation de production énergétique de ladite au moins une desdites sources d'énergie électrique.

Toujours selon des modes de réalisation particuliers, lequel ledit système comprend en coutre des moyens d'estimation de consommation énergétique dudit au moins un consommateur d'énergie, des caractéristiques obtenues dudit au moins un consommateur d'énergie électrique étant obtenues en fonction d'une estimation de consommation énergétique dudit au moins un consommateur d'énergie.

Toujours selon des modes de réalisation particuliers, ledit système comprend en outre des moyens de stockage d'énergie électrique, ladite utilisation desdites sources d'énergie électrique et dudit au moins un moyen de stockage d'énergie thermique étant en outre déterminée en fonction de caractéristiques de consommation et de restitution électriques desdits moyens de stockage d'énergie électrique.

Toujours selon des modes de réalisation particuliers, ladite utilisation desdites sources d'énergie électrique et dudit au moins un moyen de stockage d'énergie thermique est déterminée à l'aide de règles d'un système expert.

Toujours selon des modes de réalisation particuliers, ladite utilisation desdites sources d'énergie électrique et dudit au moins un moyen de stockage d'énergie thermique est déterminée à l'aide d'un ou plusieurs moteurs d'intelligence artificielle.

Toujours selon des modes de réalisation particuliers, ledit système comprend une pluralité de consommateurs d'énergie électrique destinés à la production d'énergie thermique, le procédé comprenant en outre une estimation de fourniture d'énergie électrique à chaque consommateur d'énergie électrique de ladite pluralité de consommateurs d'énergie électrique.

Toujours selon des modes de réalisation particuliers, ladite estimation de fourniture d'énergie électrique à chaque consommateur d'énergie électrique est estimée en fonction de chacune desdites caractéristiques de chaque source d'énergie électrique de ladite pluralité de sources, desdites prévisions météorologiques obtenues et des besoins d'énergie thermique estimés et en fonction d'un profil de priorité entre chaque consommateur d'énergie électrique de ladite pluralité de consommateurs d'énergie électrique.

Toujours selon des modes de réalisation particuliers, ladite utilisation desdites sources d'énergie électrique et dudit au moins un moyen de stockage d'énergie thermique est en outre déterminée à l'aide de règles de priorité déterminées par un utilisateur.

Toujours selon des modes de réalisation particuliers, l'indice de disponibilité d'au moins une desdites sources d'énergie électrique est dépendant d'au moins une contrainte imposée par un fournisseur d'accès à ladite au moins une desdites sources d'énergie électrique.

Toujours selon des modes de réalisation particuliers, l'indice de performance environnementale d'au moins une desdites sources d'énergie électrique comprend un indice RSE.

L'invention a aussi pour objet un dispositif comprenant des moyens pour mettre en oeuvre chacune des étapes du procédé décrit précédemment. Les avantages de ce dispositifs sont similaires à ceux du procédé.

### BRÈVE DESCRIPTION DES FIGURES

D'autres avantages, buts et caractéristiques particulières de la présente invention ressortiront de la description non limitative qui suit d'au moins un mode de réalisation particulier des dispositifs, système et procédés objets de la présente invention, en regard des dessins annexés, dans lesquels :
- la figure 1 illustre un exemple d'un environnement complexe d'une habitation comprenant un ensemble d'équipements consommateurs d'énergie, un ensemble de sources d'énergie et un ensemble d'équipements pouvant jouer un rôle de consommateur d'énergie et de source d'énergie, dans lequel des modes de réalisation de l'invention peuvent être mis en oeuvre ;
- la figure 2 illustre un exemple d'étapes d'un procédé de gestion de l'énergie selon certains modes de réalisation de l'invention ;
- la figure 3, comprenant les figures 3a, 3b, 3c et 3d, illustre un exemple simplifié d'échanges thermiques entre l'intérieur d'une maison, l'eau chaude sanitaire, l'eau d'une piscine et l'air extérieur selon des modes de réalisation particuliers de l'invention ; et
- la figure 4 illustre un exemple d'un calculateur pouvant mettre en oeuvre un procédé selon des modes de réalisation particuliers de l'invention.

### DESCRIPTION DÉTAILLÉE DE L'INVENTION

Les inventeurs ont observé que la variété des sources d'énergie et de leurs caractéristiques peut être exploitée pour optimiser la consommation d'énergie directe ou indirecte (par stockage puis restitution) et l'impact environnemental associé tout en offrant un confort souhaité (ou proche de celui-ci, selon un seuil prédéterminé).

Ainsi, selon des modes de réalisation de l'invention, la mise en service d'équipements consommateurs d'énergie est effectuée selon la disponibilité d'énergies renouvelables ou à faible impact environnemental et des coûts d'énergies renouvelables et non-renouvelables, de façon prédictive.

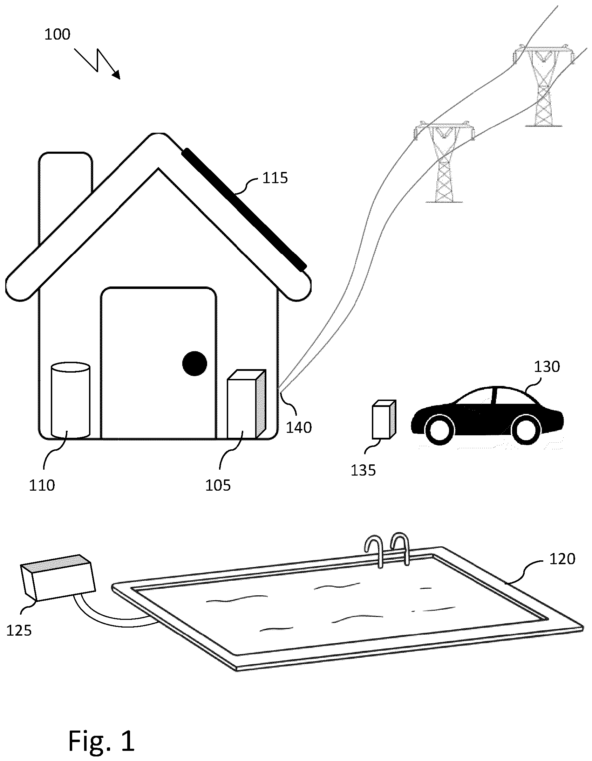

La **figure 1** illustre un exemple d'un environnement complexe d'une habitation comprenant un ensemble d'équipements consommateurs d'énergie, notamment d'équipements consommateurs d'énergie électrique destinés à produire de l'énergie thermique, un ensemble de sources d'énergie, notamment de sources d'énergie électrique, et un ensemble d'équipements pouvant jouer un rôle de consommateur d'énergie et de source d'énergie, dans lequel des modes de réalisation de l'invention peuvent être mis en oeuvre.

Comme illustré, l'environnement complexe 100 comprend ici une maison pourvue d'un système de chauffage et de climatisation référencé 105, d'un équipement de production d'eau chaude sanitaire référencé 110 et d'un ensemble d'une source d'énergie solaire 115, comprenant ici un ensemble de panneaux photovoltaïques. L'environnement complexe 100 comprend également un bassin 120, par exemple une piscine, pourvu d'une pompe à chaleur ou d'un système de chauffage réversible 125, un ou plusieurs véhicules électriques 130 pouvant se recharger sur une ou plusieurs bornes de charge 135, ainsi qu'une source d'électricité 140, par exemple un raccordement à un réseau électrique public. Ces différents éléments ont des caractéristiques énergétiques différentes en termes de quantité d'énergie produite et/ou consommée, en termes de coûts de production et/ou de consommation d'énergie et en termes d'instant ou de période de production et/ou de consommation d'énergie.

Ainsi, par exemple, le système de chauffage et de climatisation 105 a, par défaut, besoin d'énergie pour produire de la chaleur l'hiver et produire du froid l'été. Cependant, en produisant du froid pour climatiser une maison, il produit de la chaleur qui peut être utiliser à d'autres fins que celles de chauffer la maison. De même, l'équipement de production d'eau chaude sanitaire 110 a besoin de produire de la chaleur toute l'année, par exemple en utilisant de l'électricité, mais peut également fournir de la chaleur provenant de l'eau préalablement chauffée, à certaines périodes de la journée, lorsqu'il n'y a pas de besoin en eau chaude sanitaire. L'ensemble de panneaux photovoltaïques peut lui produire de l'électricité à certains moments de la journée, avec une quantité d'énergie produite qui varie selon les saisons et les conditions météorologiques.

De la même façon, la pompe à chaleur ou le système de chauffage réversible 125 de la piscine 120 peut produire de la chaleur (tout en consommant de l'énergie) à partir de la chaleur de l'eau de la piscine, étant observé que l'eau de la piscine peut également être chauffée naturellement par le soleil ou l'air ambiant, ou, au contraire, produire de la chaleur pour chauffer la piscine. La piscine peut ainsi être considérée comme une source d'énergie thermique à long terme (e.g., selon les saisons) ou à court terme (e.g., selon les heures de la journée).

Enfin, les véhicules électriques 135 peuvent être considérés comme des consommateurs électriques (pour recharger les batteries des véhicules), mais également comme des sources d'énergie électrique, par exemple lorsque les batteries sont chargées pour fournir ponctuellement de l'électricité à des heures où les véhicules ne sont pas utilisés.

Chaque élément du système complexe peut ainsi être caractérisé par des données de puissances consommées, de puissances produites, de puissance disponible, d'impact environnemental de production, d'impact environnemental d'exploitation, de coûts de production, de coûts d'exploitation, d'heures et/ou de périodes de production d'énergie, d'heures et/ou de périodes de consommation d'énergie, de contraintes d'utilisation (par exemple imposées par un fournisseur d'énergie, telles qu'une puissance maximale disponible), etc. En outre, certaines des données peuvent être obtenues selon plusieurs hypothèses, par exemple selon plusieurs situations météorologiques.

Ces données peuvent être synthétisées dans des tableaux, par exemple dans un tableau de production d'énergie et dans un tableau prédictif de consommation d'énergie.

A titre d'illustration, un tableau de production d'énergie peut être un tableau prédictif de consommation, d'impact environnemental et de coût de l'énergie, heure par heure, par période de l'année, sur une semaine glissante, avec par exemple des niveaux d'impact environnemental ou de tarif en fonction de la quantité d'énergie disponible, allant de 0 à 100% de la puissance maximale possible du site, avec comme données d'entrée :
- les caractéristiques de l'impact environnemental (e.g., indices RSE (Responsabilité Sociétale des Entreprises) tels que les émissions de gaz à effet de serre et la proximité des sources d'énergie) et les caractéristiques du ou des contrat(s) avec les fournisseurs d'énergies,
- la présence des équipements de production d'énergie existants et
- la prédiction de la production d'énergie potentielle selon la prévision des conditions météorologiques du lieu considéré,
et avec comme données de sorties, l'impact environnemental et le coût prédictif de l'énergie, heure par heure, par période de l'année, pour chaque tranche de puissance. Bien entendu, d'autres paramètres peuvent être utilisés, en plus ou à la place de ceux précités. En outre, certains des paramètres précités peuvent être ignorés.

Toujours à titre d'illustration, le tableau prédictif des besoins énergétiques, heure par heure, par période de l'année, sur une semaine glissante, peut avoir les données suivantes comme entrées :
- les caractéristiques des consommateurs d'énergies,
- les hypothèses de consommations d'énergie, basées sur les prévisions météorologiques du lieu considéré,
- le choix du niveau de confort souhaité (dans le ou les locaux, la piscine, etc.),
- le besoin et les créneaux de disponibilité pour recharge des équipements de mobilité tels que des véhicules électriques et
- les capacités de stockage d'énergie et leur forme existante.

A nouveau, d'autres paramètres peuvent être utilisés, en plus ou à la place de ceux précités. De même, certains des paramètres précités peuvent être ignorés.

Des tableaux prédictifs de besoins énergétiques peuvent en outre être associés à des profils, par exemple des profils liés à un mode économique ou un mode confort, de profils liés à un mode d'utilisation en période de congés ou en période travaillée, etc.

Par ailleurs, le système illustré sur la figure 1 comprend des moyens de mesure, par exemple des capteurs, pour déterminer des paramètres de l'environnement, par exemple des températures (à l'intérieur de la maison, à l'extérieur, dans la piscine, etc.) ainsi que des paramètres propres à certains éléments du système, par exemple la quantité d'énergie produite par certains éléments, la quantité d'énergie produite par certains éléments, différents ou non, etc.

Sur la base de ces informations prédictives, un algorithme faisant appel ou non à un ou plusieurs moteurs d'intelligence artificielle, détermine et gère la distribution d'énergie aux différents consommateurs présents de manière à ce qu'un confort minimal soit toujours atteint

(selon un seuil prédéterminé) tout en limitant l'impact environnemental et, de préférence, en optimisant le coût de l'énergie. Ce dernier peut être disponible en temps réel pour l'utilisateur.

Ainsi, des modes de réalisation de l'invention permettent de
- gérer le stockage partiel ou total de l'énergie,
- gérer l'utilisation directe partielle ou totale de l'énergie disponible,
- anticiper ou reporter la mise en service des consommateurs d'énergies,
- gérer un apport partiel d'énergie aux consommateurs d'énergies,
tout en assurant un confort énergétique minimal, en limitant l'impact environnemental, en optimisant la consommation d'énergie et en réduisant les coûts.

En outre, des règles peuvent être mises en oeuvre, par exemple lorsqu'un objectif ne peut être atteint du fait d'une insuffisance de ressources énergétiques à un impact environnemental donné ou à un coût donné. De telles règles peuvent par exemple donner une priorité au chauffage d'une maison, puis à la production d'eau chaude sanitaire et enfin à la piscine, ou donner une priorité au chauffage d'une maison, puis à la piscine et enfin à la production d'eau chaude sanitaire, ou tout autre ordre ou combinaison.

Toujours à titre d'illustration, une règle peut viser la puissance de charge attribuée à une borne de recharge d'un véhicule électrique : par exemple, la puissance de recharge indiquée à la borne de recharge est calculée en temps réel par rapport à la disponibilité de l'énergie renouvelable issue de panneaux photovoltaïques et lorsqu'un pourcentage de charge est atteint, l'énergie électrique produite localement est fournie à un autre consommateur.

A titre d'illustration encore, l'énergie électrique gratuite produite par des panneaux photovoltaïques peut, en totalité ou en partie, être stockée sous forme thermique dans une piscine ou une cuve de stockage pour être utilisée ultérieurement, à l'aide d'une pompe à chaleur, par exemple lorsque la production électrique des panneaux photovoltaïques cesse ou lorsque les besoins énergétiques sont maximaux.

Il est en outre observé qu'une quantité d'énergie électrique peut être stockée sous forme d'énergie thermique, en particulier en fonction du coût de la conversion de l'énergie électrique en énergie thermique, pour être utilisée ultérieurement. Ce coût est par exemple lié à une température d'air ou d'eau lorsque la conversion est effectuée par une pompe à chaleur. Selon les conditions météorologiques actuelles et prévues et selon les besoins d'énergie thermique actuels et envisagés, l'énergie électrique d'une source peut être utilisée directement, par conversion en énergie thermique et utilisation, ou indirectement, par conversion en énergie thermique, stockage de l'énergie thermique obtenue et restitution ultérieure de l'énergie thermique stockée. Un tel mécanisme peut être mis en oeuvre dans un système comprenant une ou plusieurs sources d'énergie électrique.

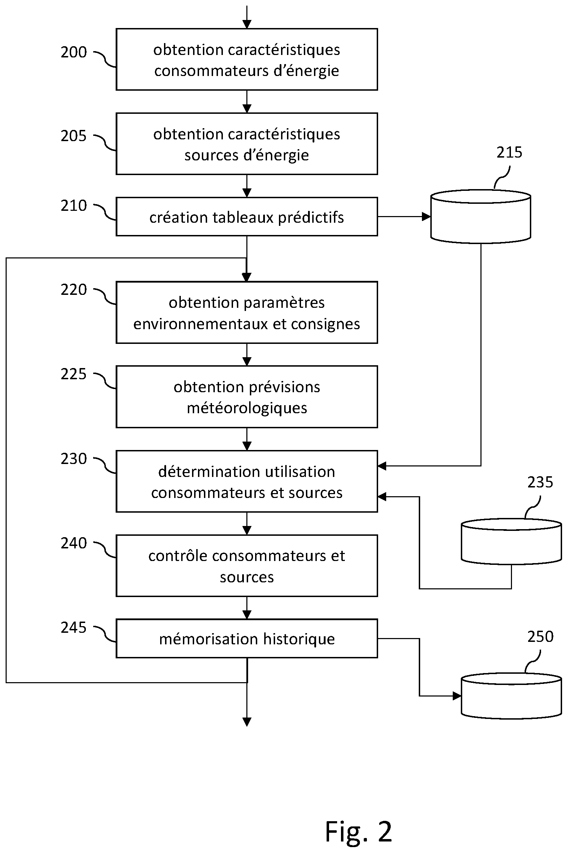

La **figure 2** illustre un exemple d'étapes d'un procédé de gestion de l'énergie selon certains modes de réalisation de l'invention.

Comme illustré, une première étape a ici pour objet d'obtenir des caractéristiques des consommateurs d'énergie présents dans le système considéré (étape 200). Comme décrit précédemment, ces consommateurs d'énergie, comprenant des consommateurs d'énergie électrique, peuvent comprendre un ou plusieurs éléments de production de chaleur ou de froid pour une maison, un ou plusieurs éléments de production de chaleur pour de l'eau chaude sanitaire, un ou plusieurs éléments de production de chaleur pour une piscine, un ou plusieurs éléments de charge, par exemple pour des véhicules électriques, un ou plusieurs éléments d'échanges thermiques, par exemple d'une pompe à chaleur, etc.

Les caractéristiques obtenues sont par exemple des puissances consommées en fonction de l'heure de la journée, de la période, des conditions météorologiques, d'un niveau de confort souhaité, des périodes d'indisponibilité (e.g., pour une borne de charge, le véhicule ne doit pas être utilisé), des capacités de stockage d'énergie, un impact environnemental, etc.

De façon similaire, des caractéristiques de sources énergie d'énergie présentes dans le système considéré sont obtenues (étape 205).

Les caractéristiques des consommateurs d'énergie et des sources d'énergie sont obtenues les unes après les autres ou de façon parallèle. Comme décrit précédemment, les sources d'énergie peuvent comprendre une ou plusieurs sources électriques, par exemple des panneaux photovoltaïques, une arrivée d'électricité d'un réseau de distribution électrique, des batteries électriques, par exemple des batteries d'un ou plusieurs véhicules, etc. Elles peuvent également comprendre des sources thermiques (chaudes ou froides) telles que des chaudières, des pompes à chaleur (par exemple air/eau ou eau/eau), etc., qui peuvent en outre se comporter comme des consommateurs d'énergie.

Comme en ce qui concerne les caractéristiques des consommateurs d'énergie, les caractéristiques obtenues des sources d'énergie sont par exemple des puissances produites en fonction de l'heure de la journée, de la période, des conditions météorologiques, d'un impact environnemental associé, d'un coût associé, des périodes d'indisponibilité (e.g., pour une borne de charge, le véhicule ne doit pas être utilisé), des capacités de stockage d'énergie, des puissances disponibles (par exemple selon des contraintes d'un fournisseur d'énergie), etc.

Ces caractéristiques sont mémorisées, par exemple sous la forme de tableaux, par exemple d'un tableau prédictif de consommation, d'impact environnemental et de coût d'énergie et d'un tableau prédictif de disponibilités énergétiques (étape 210). Ces tableaux sont par exemple stockés dans une base de données 215, locale ou distante (i.e., accessible via un réseau de communication).

Dans une étape suivante, des paramètres environnementaux et des consignes sont obtenus (étape 220). Les paramètres environnementaux sont par exemple des températures dans certaines pièces de la maison, la température extérieure, la température de l'eau d'un bassin, la température de l'eau d'un système de production d'eau chaude sanitaire, etc. Ces paramètres peuvent également comprendre des informations de production ou de consommation d'énergie par des éléments du système considéré, par exemple la puissance électrique produite par des panneaux photovoltaïques et la puissance consommée par une borne de charge. Les consignes obtenues sont par exemple des températures cibles pour certaines pièces de la maison, l'eau d'un bassin, l'eau d'un système de production d'eau chaude sanitaire, etc. Ces consignes sont fixes ou variables, par exemple selon l'heure de la journée, le jour de la semaine, etc.

Dans une étape suivante, les prévisions météorologiques pour le lieu où se trouve le système considéré sont obtenues (étape 225). A titre d'illustration, de telles prévisions comprennent par exemple les températures prévues heure par heures dans les trois jours à venir, le rayonnement solaire, la direction et la force du vent.

Connaissant l'environnement, les caractéristiques des consommateurs d'énergie, les caractéristiques des sources d'énergie et les prévisions météorologiques, l'utilisation des sources d'énergie et des consommateurs d'énergie peut être estimée pour attendre les consignes (ou approcher de celles-ci), en optimisant l'utilisation de l'énergie, notamment en favorisant les énergies renouvelables au détriment des énergies carbonées, c'est-à-dire en réduisant l'impact environnemental, et en réduisant les coûts de l'énergie consommée (étape 230). Cette estimation peut être effectuée à l'aide de règles, par exemple de règles d'un système expert, pouvant être mémorisées dans une base de données 235, locale ou distante, et/ou d'un ou plusieurs moteurs d'intelligence artificielle.

Les consommateurs d'énergie et les sources d'énergie sont alors contrôlés selon l'utilisation estimée (étape 240).

Selon des modes de réalisation particuliers, un historique des données mesurées est mémorisé (étape 245) dans une base de données 250, locale ou distante, pour permettre, par exemple, l'apprentissage d'un ou plusieurs moteurs d'intelligence artificielle, par exemple des modèles à base de réseaux de neurones. Après apprentissage, ce ou ces moteurs d'intelligence artificielle peuvent être utilisés pour optimiser l'utilisation des consommateurs d'énergie

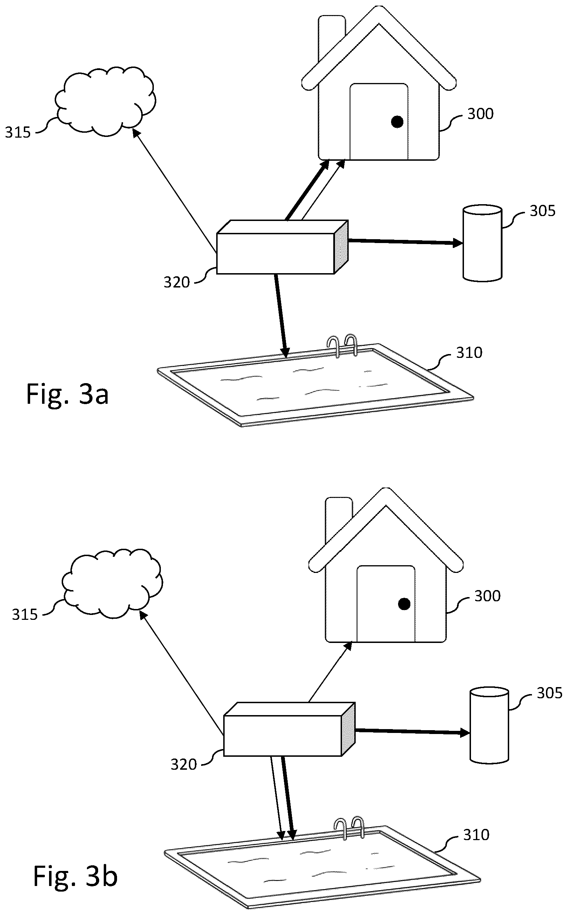

Les **figures 3a** à 3d illustrent un exemple simplifié d'échanges thermiques entre l'air intérieur d'une maison (référence 300), l'eau chaude sanitaire (référence 305), l'eau d'une piscine (référence 310) et l'air extérieur (référence 315). Ces échanges thermiques peuvent notamment être effectués à l'aide de pompes à chaleur air/eau et/ou eau/eau, globalement référencées 320, qui consomment de l'énergie électrique. Dans ces figures, les flèches en traits fins représentent un transfert de froid et les flèches en traits épais représentent un transfert de chaleur.

La figure 3a vise des échanges thermiques à une période pouvant correspondre aux mois de mai et septembre. Comme illustré, des calories sont prises dans l'air extérieur (i.e., de l'air froid est rejeté à l'extérieur) pour chauffer l'eau chaude sanitaire et/ou l'eau de la piscine. Selon les conditions météorologiques, les calories prises dans l'air extérieur peuvent également être utilisées pour chauffer l'air de pièces de la maison ou, au contraire, des calories peuvent être prises dans la maison (i.e., de l'air froid est rejeté dans la maison pour la climatiser) pour chauffer l'eau chaude sanitaire et/ou l'eau de la piscine.

La figure 3b vise des échanges thermiques à une période pouvant correspondre au mois de juin. Selon cet exemple, des calories sont prises dans l'air extérieur (i.e., de l'air froid est rejeté à l'extérieur) et dans l'air de la maison (i.e., de l'air froid est rejeté dans la maison pour la climatiser) pour chauffer l'eau chaude sanitaire et, selon les conditions météorologiques, l'eau de la piscine. S'il fait particulièrement chaud, des calories peuvent être prises dans l'eau de la piscine, par exemple la nuit après qu'elle ait chauffé dans la journée, pour chauffer l'eau chaude sanitaire.

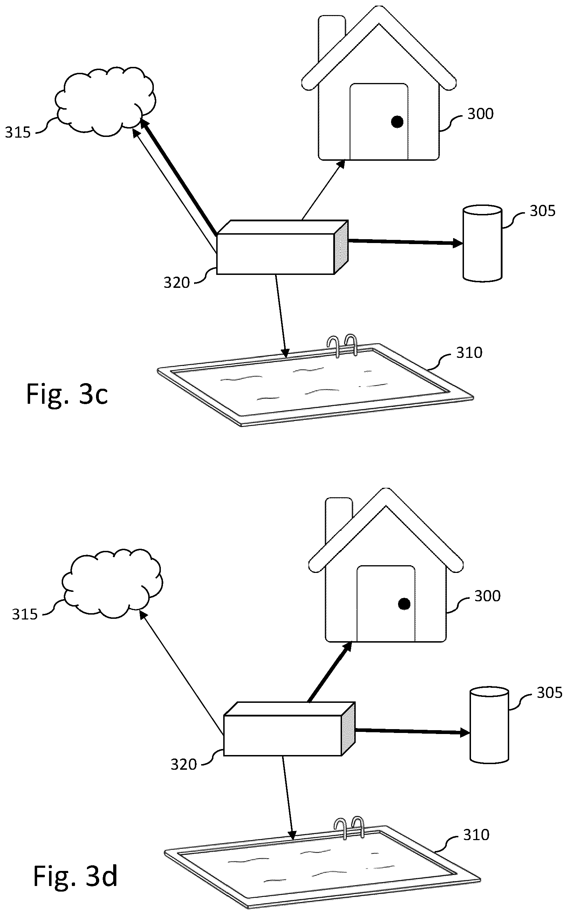

La figure 3c vise des échanges thermiques à une période pouvant correspondre aux mois de juillet et août. Selon cet exemple, des calories sont prises dans l'air de la maison (i.e., de l'air froid est rejeté dans la maison pour la climatiser) et dans l'eau de la piscine, par exemple la nuit après qu'elle ait chauffé dans la journée, pour chauffer l'eau chaude sanitaire. Selon les conditions météorologiques, des calories peuvent être prises dans l'air extérieur (i.e., de l'air froid est rejeté à l'extérieur) pour chauffer l'eau chaude sanitaire ou des calories peuvent être prises dans l'air de la maison (i.e., de l'air froid est rejeté dans la maison pour la climatiser) et rejetées dans l'air extérieur.

La figure 3d vise des échanges thermiques à une période pouvant correspondre aux mois d'hivers. Comme illustré ici, des calories sont prises dans l'air extérieur (i.e., de l'air froid est rejeté à l'extérieur) pour chauffer des pièces de la maison et/ou l'eau chaude sanitaire. Selon les conditions météorologiques, des calories peuvent être prises dans l'eau de la piscine, par exemple la nuit après qu'elle ait chauffé dans la journée, pour chauffer des pièces de la maison et/ou l'eau chaude sanitaire.

Une granulométrie fine permet d'optimiser les transferts d'énergie pour limiter la consommation d'énergie, par exemple en utilisant la nuit l'énergie accumulée par une piscine le jour sous forme de chaleur, d'utiliser la nuit l'énergie électrique accumulée dans une voiture électrique chargée le jour lorsque des panneaux voltaïques produisent de l'énergie électrique, etc. L'estimation des besoins d'énergie électrique pour atteindre les transferts thermiques envisagés permet d'optimiser ces derniers en limitant la consommation globale d'énergie et l'impact environnemental

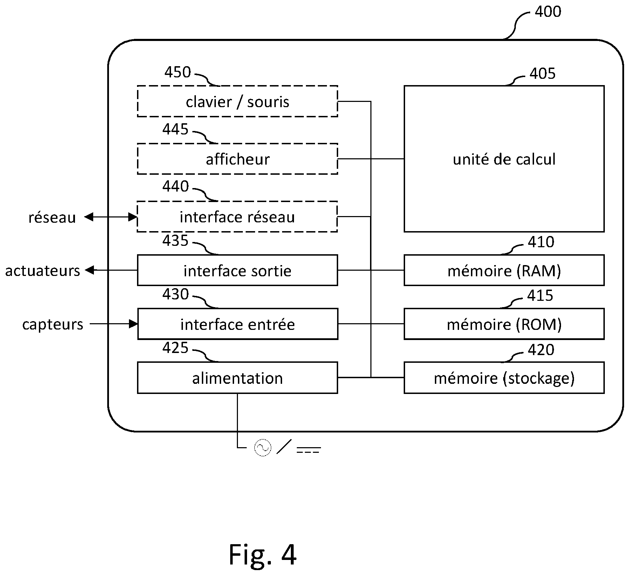

La **figure 4** illustre un exemple d'un calculateur pouvant mettre en oeuvre un procédé selon des modes de réalisation particuliers de l'invention, notamment le procédé illustré sur la figure 2. Le calculateur 400 est par exemple un ordinateur de type PC (sigle de personal computer en terminologie anglo-saxonne).

Comme illustré, le calculateur 400 comprend une alimentation électrique 425 fournissant l'énergie électrique nécessaire aux composants du calculateur 400. Il comprend en outre un ou plusieurs bus de communication, partagés au non, auxquels sont reliés :
- une unité centrale de traitement ou microprocesseur 405 (CPU, sigle de central processing unit en terminologie anglo-saxonne) comprenant en outre, de préférence, un ou plusieurs coprocesseurs, par exemple de type GPU (sigle de graphical processing unit en terminologie anglo-saxonne), permettant d'accélérer les calculs (par exemple en les parallélisant), notamment des calculs d'un moteur d'intelligence artificielle ;
- une mémoire vive ou mémoire cache 410 (RAM, acronyme de random access memory en terminologie anglo-saxonne) comportant des registres adaptés à enregistrer des variables et paramètres créés et modifiés au cours de l'exécution des programmes mettant en oeuvre les étapes décrites précédemment ;
- une mémoire morte 415 (ROM, acronyme de read only memory en terminologie anglo-saxonne) pouvant comporter un système d'exploitation et des programmes mettant en oeuvre les étapes décrites précédemment ;
- un support de stockage 420, fixe ou amovible, pouvant notamment comporter des règles utilisées par le système expert et/ou pouvant être utilisé pour stocker des résultats du ou des moteurs d'intelligence artificielle et/ou du système expert ;
- une interface d'entrée 430 pour recevoir, de façon sélective, des données issues de capteurs ; et
- une interface de sortie 435 pour contrôler un ou plusieurs actuateurs. Les interfaces d'entrée et de sortie peuvent être distinctes ou non. Il peut s'agir, par exemple, d'une interface standard d'entrée/sortie.

Le calculateur 400 comprend en outre, de préférence, une interface de communication 440 reliée à un réseau de communication, par exemple un réseau de communication sans fil et/ou un réseau de communication local, l'interface étant apte à transmettre et à recevoir des données, notamment vers ou depuis un autre des serveurs, des ordinateurs, des tablettes et/ou des smartphones.

Optionnellement, le calculateur 400 peut également disposer d'un afficheur 445, notamment d'un afficheur tactile permettant à un utilisateur d'interagir avec des programmes mis en oeuvre par le calculateur 400, et de moyens de saisie tels qu'un clavier et/ou une souris permettant à un utilisateur d'interagir avec des programmes mis en oeuvre par le calculateur 400.

Le bus de communication permet la communication et l'interopérabilité entre les différents éléments inclus dans le calculateur 400 ou reliés à lui. La représentation du bus n'est pas limitative et, notamment, l'unité centrale de traitement est susceptible de communiquer des instructions à tout élément du calculateur 400 directement ou par l'intermédiaire d'un autre élément du calculateur 400.

Le code exécutable des programmes permettant au calculateur 400 de mettre en oeuvre, en totalité ou en partie, le procédé selon l'invention, peut être stocké, par exemple, dans la mémoire morte 415. Selon une variante, le code exécutable des programmes pourra être reçu par l'intermédiaire du réseau de communication, via l'interface 440, pour être stocké de façon identique à celle décrite précédemment. De manière plus générale, le ou les programmes pourront être chargés dans un des moyens de stockage du calculateur 400 avant d'être exécutés.

L'unité centrale de traitement 405 va commander et diriger l'exécution des instructions ou portions de code logiciel du ou des programmes selon l'invention, instructions qui sont stockées, par exemple, dans la mémoire morte 415 ou bien dans les autres éléments de stockage précités. Lors de la mise sous tension, le ou les programmes qui sont stockés dans une mémoire non volatile, par exemple la mémoire morte 415, sont transférés dans la mémoire vive 410 qui contient alors le code exécutable du ou des programmes, ainsi que des registres pour mémoriser les variables et paramètres nécessaires à la mise en oeuvre du procédé selon l'invention.

Le calculateur 400 peut être installé à proximité d'une piscine ou à distance, par exemple dans une installation d'un tiers en charge de l'entretien de la piscine. Il peut également être scindé en plusieurs éléments, certains pouvant être installés à proximité de la piscine et d'autres à distance. De même, une partie des traitements et/ou calculs peut être effectuée dans ou à proximité des capteurs. A titre d'illustration, une reconnaissance de personnes peut être effectuée dans une caméra, l'information étant transmise en plus ou à la place d'images à un système de contrôle de la piscine. Toujours à titre d'illustration, le module d'intelligence artificielle peut être mis en oeuvre à distance et le système expert peut être mis en oeuvre de façon locale.

Bien entendu, la présente invention ne se limite pas aux formes de réalisation décrites ci-avant à titre d'exemples. Elle s'étend à d'autres variantes.

En fonction du mode de réalisation choisi, certains actes, actions, évènements ou fonctions de chacune des méthodes décrites dans le présent document peuvent être effectués ou se produire selon un ordre différent de celui dans lequel ils ont été décrits, ou peuvent être ajoutés, fusionnés ou bien ne pas être effectués ou ne pas se produire, selon le cas. En outre, dans certains modes de réalisation, certains actes, actions ou évènements sont effectués ou se produisent concurremment et non pas successivement.

Bien que décrits à travers un certain nombre d'exemples de réalisation détaillés, le dispositif, le système et le procédé proposés comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent. De plus, différents aspects et caractéristiques décrits ci-dessus peuvent être mis en oeuvre ensemble, ou séparément, ou bien substitués les uns aux autres, et l'ensemble des différentes combinaisons et sous combinaisons des aspects et caractéristiques font partie de la portée de l'invention. En outre, il se peut que certains systèmes et équipements décrits ci-dessus n'incorporent pas la totalité des modules et fonctions décrits pour les modes de réalisation préférés.

## Revendications

1. Procédé de gestion d'énergie dans un système pour habitation comprenant une pluralité de sources d'énergie électrique, au moins un consommateur d'énergie électrique destiné à la production d'énergie thermique et au moins un moyen de stockage d'énergie thermique, le procédé comprenant les étapes suivantes ;
obtention (200) de caractéristiques dudit au moins un consommateur d'énergie électrique, lesdites caractéristiques obtenues dudit au moins un consommateur d'énergie électrique comprenant un indice de besoins énergétiques, l'indice de besoins énergétiques étant dépendant de conditions météorologiques ;
obtention (205) de caractéristiques de chaque source d'énergie électrique de ladite pluralité de sources, lesdites caractéristiques obtenues de chaque source d'énergie électrique comprenant un indice de performance environnementale et un indice de disponibilité, l'indice de disponibilité d'au moins une desdites sources d'énergie électrique étant dépendant de conditions météorologiques ;
obtention (220) d'au moins une indication de température actuelle et d'au moins une température cible ;
obtention (225) de prévisions météorologiques d'un lieu où se situe ledit système ; estimation (230) de besoins d'énergie thermique en fonction desdites indications de température obtenues et desdites prévisions météorologiques obtenues et estimation d'une utilisation desdites sources d'énergie électrique et dudit au moins un moyen de stockage d'énergie thermique, ladite utilisation desdites sources d'énergie électrique et dudit au moins un moyen de stockage d'énergie thermique étant déterminée en fonction de chacune desdites caractéristiques de chaque source d'énergie électrique de ladite pluralité de sources, desdites prévisions météorologiques obtenues et des besoins d'énergie thermique estimés.

2. Procédé selon la revendication 1, selon lequel ledit système comprend en coutre des moyens d'estimation de production énergétique d'au moins une desdites sources d'énergie électrique, des caractéristiques de ladite au moins une desdites sources d'énergie étant obtenues en fonction d'une estimation de production énergétique de ladite au moins une desdites sources d'énergie électrique.

3. Procédé selon la revendication 1 ou la revendication 2, selon lequel ledit système comprend en coutre des moyens d'estimation de consommation énergétique dudit au moins un consommateur d'énergie, des caractéristiques obtenues dudit au moins un consommateur d'énergie électrique étant obtenues en fonction d'une estimation de consommation énergétique dudit au moins un consommateur d'énergie.

4. Procédé selon l'une quelconque des revendications 1 à 3, selon lequel ledit système comprend en outre des moyens de stockage d'énergie électrique, ladite utilisation desdites sources d'énergie électrique et dudit au moins un moyen de stockage d'énergie thermique étant en outre déterminée en fonction de caractéristiques de consommation et de restitution électriques desdits moyens de stockage d'énergie électrique.

5. Procédé selon l'une quelconque des revendications 1 à 4, selon lequel ladite utilisation desdites sources d'énergie électrique et dudit au moins un moyen de stockage d'énergie thermique est déterminée à l'aide de règles d'un système expert.

6. Procédé selon l'une quelconque des revendications 1 à 4, selon lequel ladite utilisation desdites sources d'énergie électrique et dudit au moins un moyen de stockage d'énergie thermique est déterminée à l'aide d'un ou plusieurs moteurs d'intelligence artificielle.

7. Procédé selon l'une quelconque des revendications 1 à 6, selon lequel ledit système comprend une pluralité de consommateurs d'énergie électrique destinés à la production d'énergie thermique, le procédé comprenant en outre une estimation de fourniture d'énergie électrique à chaque consommateur d'énergie électrique de ladite pluralité de consommateurs d'énergie électrique.

8. Procédé selon la revendication 7, selon lequel ladite estimation de fourniture d'énergie électrique à chaque consommateur d'énergie électrique est estimée en fonction de chacune desdites caractéristiques de chaque source d'énergie électrique de ladite pluralité de sources, desdites prévisions météorologiques obtenues et des besoins d'énergie thermique estimés et en fonction d'un profil de priorité entre chaque consommateur d'énergie électrique de ladite pluralité de consommateurs d'énergie électrique.

9. Procédé selon l'une quelconque des revendications 1 à 6, selon lequel ladite utilisation desdites sources d'énergie électrique et dudit au moins un moyen de stockage d'énergie thermique est en outre déterminée à l'aide de règles de priorité déterminées par un utilisateur.

10. Procédé selon l'une quelconque des revendications 1 à 9, selon lequel l'indice de disponibilité d'au moins une desdites sources d'énergie électrique est dépendant d'au moins une contrainte imposée par un fournisseur d'accès à ladite au moins une desdites sources d'énergie électrique.

11. Procédé selon l'une quelconque des revendications 1 à 10, selon lequel l'indice de performance environnementale d'au moins une desdites sources d'énergie électrique comprend un indice RSE.

12. Dispositif comprenant des moyens pour mettre en oeuvre chacune des étapes du procédé selon l'une quelconque des revendications 1 à 11.
